(19) Europäisches Patentamt
European Patent Office
Office européen des brevets

(11) **EP 4 288 932 B1**

(12) **EUROPÄISCHE PATENTSCHRIFT**

(45) Veröffentlichungstag und Bekanntmachung des Hinweises auf die Patenterteilung:
**05.06.2024 Patentblatt 2024/23**

(21) Anmeldenummer: **23714758.2**

(22) Anmeldetag: **29.03.2023**

(51) Internationale Patentklassifikation (IPC):
**G06T 7/00** *(2017.01)* **G06T 7/11** *(2017.01)*
**G06T 7/136** *(2017.01)* **G06T 7/68** *(2017.01)*
**G06T 7/507** *(2017.01)*

(52) Gemeinsame Patentklassifikation (CPC):
**G06T 7/0004; G06T 7/11; G06T 7/136;**
**G06T 7/507; G06T 7/68;** G06T 2207/30108

(86) Internationale Anmeldenummer:
**PCT/EP2023/058131**

(87) Internationale Veröffentlichungsnummer:
**WO 2023/186975 (05.10.2023 Gazette 2023/40)**

(54) **VERFAHREN UND VORRICHTUNG ZUM AUSWERTEN EINER SCHWEISSQUALITÄT EINER SCHWEISSNAHT ZWISCHEN ENDABSCHNITTEN VON ZWEI LEITERELEMENTEN**

METHOD AND DEVICE FOR EVALUATING A WELD QUALITY OF A WELD JOINT BETWEEN END SECTIONS OF TWO CONDUCTOR ELEMENTS

PROCÉDÉ ET DISPOSITIF D'ÉVALUATION D'UNE QUALITÉ DE SOUDAGE D'UN CORDON DE SOUDURE ENTRE DES SECTIONS D'EXTRÉMITÉ DE DEUX ÉLÉMENTS CONDUCTEURS

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **01.04.2022 DE 102022107886**

(43) Veröffentlichungstag der Anmeldung:
**13.12.2023 Patentblatt 2023/50**

(73) Patentinhaber: **Gehring Technologies GmbH + Co. KG**
**73760 Ostfildern (DE)**

(72) Erfinder: **SCHMID, Laurens**
**72654 Neckartenzlingen (DE)**

(74) Vertreter: **DREISS Patentanwälte PartG mbB**
**Friedrichstraße 6**
**70174 Stuttgart (DE)**

(56) Entgegenhaltungen:
**EP-A1- 0 996 091        JP-A- 2014 238 387**
**US-A1- 2013 075 371**

- **Vate Johannes: "Quality Control and Fault Classification of Laser Welded Hairpins in Electrical Motors", , 18. Dezember 2020 (2020-12-18), XP055934462, Gefunden im Internet:**
**URL:https://ieeexplore.ieee.org/stampPDF/getPDF.jsp?tp=&arnumber=9287701&ref=aHR0cHM**
**6Ly9pZWVleHBsb3JlLmllZWUub3JnL2RvY3VtZW50L zkyODc3MDE= [gefunden am 2022-06-22]**
- **MAYR ANDREAS ET AL: "Evaluation of Machine Learning for Quality Monitoring of Laser Welding Using the Example of the Contacting of Hairpin Windings", 2018 8TH INTERNATIONAL ELECTRIC DRIVES PRODUCTION CONFERENCE (EDPC), IEEE, 4. Dezember 2018 (2018-12-04), Seiten 1-7, XP033526174, DOI: 10.1109/EDPC.2018.8658346 [gefunden am 2019-03-04]**

EP 4 288 932 B1

• TAKANORI NINOMIYA ET AL: "AUTOMATIC 21/2D SHAPE INSPECTION SYSTEM FOR VIA-HOLE FILLINGS OF GREEN SHEETS BY SHADOW IMAGE ANALYSIS", PROCEEDINGS OF THE INTERNATIONAL CONFERENCE ON ROBOTICS AND AUTOMATION. SCOTTSDALE, MAY 15 - 19, 1989; [PROCEEDINGS OF THE INTERNATIONAL CONFERENCE ON ROBOTICS AND AUTOMATION], WASHINGTON, IEEE COMP. SOC. PRESS, US, Bd. VOL. 1, Nr. 1989, 15. Mai 1989 (1989-05-15), Seiten 515-520, XP000042748, ISBN: 978-0-8186-1938-0

**Beschreibung**

Die Erfindung betrifft ein Verfahren und eine Vorrichtung zum Auswerten einer Schweißqualität einer Schweißnaht mit der Endabschnitte von zumindest zwei länglich erstreckten Leiterelementen, welche durch Bestrahlung ihrer Stirnseiten miteinander verschweißt sind.

Im Stand der Technik sind Verfahren und Vorrichtungen zur Herstellung von Statoren bekannt. Verwendung finden Statoren in elektrodynamischen Maschinen bzw. elektromechanischen Wandlern, z. B. in Elektromotoren.

Bei der Fertigung von elektromechanischen Wandlern, insbesondere Elektromotoren, insbesondere für Traktionsantriebe, werden einzelne Wicklungselemente (Steckspulen, sog. "Hairpins") hergestellt, die im weiteren Prozess zu einer Statorwicklung weiterverarbeitet werden.

Um bedingt durch höheren Füllungsgrad eine höhere Effizienz von Elektromaschinen zu erreichen, wurde in der Hairpin-Technologie von runden auf rechteckige Leiterquerschnitte übergegangen. Im Rahmen der Erfindung ist die Verwendung von beliebigen Leiterquerschnitten möglich, also bspw. runde oder rechteckige Querschnitte.

Im Rahmen der Herstellung der Wicklungselemente werden aus Endlosmaterial entsprechende Leiterstücke abgetrennt, bspw. durch Schneiden. Anschließend werden die Leiterstücke an Abschnitten, die in einem späteren Schritt verschweißt werden sollen, abisoliert. Hiernach können die Leiterstücke zu geeigneten Wicklungselementen umgeformt werden, bspw. zu entsprechenden Hairpins gebogen werden. Ein Hairpin weist üblicherweise zwei Schenkel auf, die über einen Verbindungsabschnitt miteinander verbunden sind (ähnlich dem geschlossenen Ende einer U-förmigen Haarnadel). Auf der dem Verbindungsabschnitt abgewandten Seite weisen die Schenkel jeweils ein freies Ende auf. Die Schenkel stehen üblicherweise parallel zueinander und weisen jeweils im Bereich ihrer Enden einen abisolierten Abschnitt auf, im Bereich dessen die Hairpins später verschweißt werden können.

Mehrere Hairpins können zu einem Korb (Statorkorb) gefügt werden und es kann optional eine Papierisolierung in den Stator eingefügt werden. Hiernach werden die Hairpins bzw. der Korb in den Stator eingefügt und deren Enden ggf. gegeneinander verdreht ("Twisten"), wodurch die Hairpins formschlüssig im Statorkern gehalten werden können. Die Wicklungselemente bzw. Hairpins können nach der Positionierung am Stator an ihren Enden miteinander verschweißt werden. Um dieses Verschweißen sicher und reproduzierbar zu gestalten, sollten die miteinander zu verschweißende Hairpins in einer genau definierten Position zueinander positioniert werden, um deren gewünschten Kontakt miteinander sicherzustellen.

Das Schweißen selbst erfolgt typischerweise mittels Laserstrahlung. Hierzu werden üblicherweise eine entsprechende Laserstrahlquelle und eine sogenannte Scanneroptik mit Kamera eingesetzt. Die Scanneroptik ermöglicht mit der Kamera eine Lageerkennung der Enden der Leiterelemente vor dem Schweißen und die Scanneroptik ermöglicht ferner mit zwei beweglichen Spiegeln eine hochdynamische Bewegung des Laserstrahls auf den zu schweißenden Stirnseiten der beiden Leiterelemente. Die Anzahl der zu verschweißenden Leiterelemente je Stator liegt typischerweise im dreistelligen Bereich. Bereits eine mangelhafte Schweißstelle kann zum Versagen des Stators führen. Da die Güte der Schweißnaht von verschiedenen Faktoren abhängig ist, ist eine Qualitätskontrolle notwendig. Qualitätskriterien für die Schweißnaht können individuell festgelegt werden, haben aber meist gemeinsam, dass ein gewisser Anbindungsquerschnitt notwendig ist, um den gewünschten Stromfluss sicherzustellen.

Für die Qualitätskontrolle von geschweißten Hairpins sind unterschiedliche Verfahren bekannt. Darunter beispielsweise ein Querschliff durch die Schweißnaht. Nachteilig ist dabei die Art der Qualitätskontrolle als zerstörende Prüfung sowie ihre Kosten- und Zeitintensivität. Bekannt ist beispielsweise auch eine Vermessung der erzeugten Schweißperle der Schweißnaht mittels optischer Kohärenztomografie oder einem Laser Sensor zur Profilmessung. Nachteilig daran ist, dass hierfür eine zusätzliche technische Einrichtung notwendig ist und ferner, dass diese Messung langsam und damit kostenintensiv ist. Auch eine seitliche Bildaufnahme der geschweißten Hairpins, also beim Blick in der Ebene der Stirnflächen, wurde in JP2019120650A vorgeschlagen. Doch auch hierfür bedarf es einer zusätzlichen und teuren Einrichtung. Zudem ist dabei jeweils nur eine Hairpin-Schweißnaht pro Zeitpunkt untersuchbar. Schließlich wurde auch schon eine Messung des Prozessleuchtens während des Schweißprozesses vorgeschlagen. Wobei jedoch eine genaue Korrelation zwischen gemessenem Lichtsignal und Schweißergebnis schwerfällt.

Insgesamt sind die bekannten Verfahren zur Qualitätskontrolle damit in vielerlei Hinsicht nachteilig, insbesondere aufwändig und kostenintensiv sowie fehleranfällig.

Die folgenden Dokumente offenbaren jeweils ein Verfahren mit Merkmalen des Anspruchs 1:

Vate: "Quality Control and Fault Classification of Laser Welded Hairpins in Electrical Motors", 18. Dezember 2020, XP055934462.

Mayr et al.: "Evaluation of Machine Learning for Quality Monitoring of Laser Welding Using the Example of the Contacting of Hairpin Windings", 2018 8th International Electric Drives Production Conference (EDPC), IEEE, 4. Dezember 2018, Seiten 1-7, XP033526174.

Takanori et al.: "Automatic $2\frac{1}{2}D$ shape inspection system for via-hole fillings of green sheets by shallow image analysis", Proceedings of the International Conference on Robotics and Automation. Scottsdale, May 15 - 19, 1989, Washington, IEEE Comp. Soc. Press, US, Bd. 1, Nr. 1989, 15. Mai 1989, Seiten 515-520, XP000042748.

JP 2014 238 387 A, US 2013 / 075 371 A1, sowie EP 0 996 091 A1.

Der Erfindung liegt die Aufgabe zugrunde, diese und weitere Nachteile des Standes der Technik zu überwinden und ein Verfahren sowie eine Vorrichtung zur Verfügung zu stellen, mit denen eine Qualitätskontrolle einer Schweißnaht zwischen Endabschnitten von zumindest zwei länglich erstreckten Leiterelementen durchgeführt werden kann, die einfach, kostengünstig, schnell und präzise ist.

Gelöst wird die Aufgabe durch ein Verfahren nach Anspruch 1 und eine Vorrichtung nach Anspruch 14.

Das Verfahren ist also ein Verfahren zum Auswerten der Schweißqualität einer Schweißnaht zwischen Endabschnitten von zumindest zwei länglich erstreckten Leiterelementen, welche durch Bestrahlung, insbesondere durch Bestrahlung mittels eines Lasers, ihrer Stirnseiten miteinander verschweißt sind.

Dabei weist das Verfahren mindestens die folgenden Schritte auf:

(a) Erfassen eines Bildes der Stirnseiten der mittels der Schweißnaht miteinander verschweißten Leiterelemente. Dabei ist das Bild von den Stirnseiten der Leiterelemente her aufgenommen und der vom Bild erfasste Bereich umfasst zumindest eine gesamte Oberfläche der Schweißnaht auf der Stirnseite der Leiterstücke. Zudem wird das Bild mit verschiedenen Intensitätsstufen je Pixel des Bildes erfasst. Dabei sind die Intensitätsstufen ein Indikator für eine Lichtmenge, die beim Aufnehmen des Bildes lokal von der aufgenommenen Position reflektiert worden ist. Der Indikator bzw. die Lichtmenge ist damit ein Maß für die lokale Ausrichtung der Oberfläche der Schweißnaht. Insbesondere wird die Schweißnaht parallel zur Richtung der Aufnahme des Bildes mit Licht beleuchtet.

(b) Unterteilen des Bildes in eine erste Teilmenge von Pixeln, deren Intensitätsstufen größer oder gleich einem festgelegten Intensitätsstufen-Schwellenwert sind, und in eine zweite Teilmenge von Pixeln, deren Intensitätsstufen kleiner oder gleich dem Intensitätsstufen-Schwellenwert sind.

(c) Beurteilen der Schweißqualität der Schweißnaht anhand eines Vergleichs einer Anzahl und/oder Lage der Pixel der ersten Teilmenge und/oder der zweiten Teilmenge mit zumindest einem Pixel-Sollwert oder Pixel-Sollbereich einer Anzahl und/oder Lage von Pixeln der ersten Teilmenge und/oder der zweiten Teilmenge, die einer Schweißnaht gewünschter Qualität entsprechen.

Die Erfindung schlägt folglich ein Verfahren zur Qualitätskontrolle der geschweißten Endabschnitte bzw. Enden von zwei oder mehr Leiterelementen vor, mit deren Hilfe der Anbindungsquerschnitt der Schweißnaht beurteilt wird. Die Qualitätskontrolle erfolgt durch Vergleich der aufgenommenen Pixel bzw. deren Anzahl je Teilmenge und/oder deren Lage je Teilmenge mit Sollwerten (Pixel-Sollwert oder Pixel-Sollbereich). Das Verfahren ist zerstörungsfrei, einfach, kostengünstig, schnell und präzise ausführbar. Die Qualitätskontrolle kann bspw. eine bestimmte Anzahl an Pixeln einer Teilmenge erfordern oder eine bestimmte räumliche Verteilung an Pixeln einer Teilmenge. Hierauf wird weiter unten noch im Detail eingegangen.

Die nachfolgenden Erläuterungen beziehen sich auf das erfindungsgemäße Verfahren und die Vorrichtung gleichermaßen.

Es wird erfindungsgemäß ein Bild verschweißter Stirnseiten von Leiterelementen erfasst, insbesondere mittels einer Bilderfassungseinrichtung, insbesondere einer Kamera, aufgenommen. Das Bild wird von den Stirnseiten der Leiterelemente her aufgenommen und zeigt die Schweißnaht damit von oben bzw. beim Blick senkrecht auf die Stirnseiten der Leiterelemente bzw. Leiterstücke.

Von oben meint dabei also gegenüberliegend von den Stirnseiten. Das Bild erfasst dabei einen Bereich, der wenigstens die gesamte Schweißnaht bzw. die Größe der gewünschten Schweißnaht bei vorgesehener Lage umfasst. Auch Teile der Oberfläche bzw. Stirnseiten der Leiterelemente und ggf. deren Umgebung können Teil des erfassten Bildes sein.

Die Schweißnaht ist dabei typischerweise in Form einer Schweißperle (im Wesentlichen halbkugelartig) ausgebildet. Die Schweißperle bildet sich nach einem durch die (Laser-) Bestrahlung erzeugten kugelförmigen bzw. kugelartigen Schmelzbad an den Endabschnitten der Leiterelemente aus. Folglich weist auch die erstarrte Schweißperle eine Kugelform bzw. Halbkugelform auf.

Die Endabschnitte der Leiterelemente sind in Richtung der Bilderfassungseinrichtung erstreckt und die Stirnseiten senkrecht hierzu. Die Blickrichtung der Bilderfassungseinrichtung ist also senkrecht auf die Stirnseiten. Typischerweise wird die Schweißnaht und deren Umgebung aus Richtung der Bilderfassungseinrichtung bzw. Kamera, also parallel zu deren Strahlengang, beleuchtet, wofür eine Beleuchtungseinrichtung an der entsprechenden Vorrichtung vorgesehen sein kann bzw. im Rahmen des Verfahrens eingesetzt wird.

Das auf die Schweißnaht bzw. die Schweißperle einfallende Beleuchtungslicht wird an dieser reflektiert und lässt die Schweißperle bzw. ihre Kugelform bzw. die Form der Schweißnaht auf dem aufgenommenen Bild erkennen. Bei der Reflektion des Beleuchtungslichts wird bspw. bei einer weitestgehend kugelförmigen bzw. halbkugelförmigen Form der Schweißnaht je nach lokaler Position auf der Oberfläche der Schweißnaht ein unterschiedlicher Teil des Lichts reflektiert. Eine halbkugelförmige Schweißperle erscheint somit in der Mitte des erfassten Bildes hell und zum Rand des erfassten Bildes hin dunkler. Senkrecht auf die Stirnseite der Leiterelemente gerichtetes Licht wird an parallel zur Stirnseite verlaufenden Bereichen der Schweißnaht in einem höheren Maß in Richtung der Bilderfassungseinrichtung zur Aufnahme des Bilds zurückgeworfen als Licht, das auf danebenliegende abgewinkelt verlaufende Bereiche der Schweißnaht fällt.

Die Schweißnaht ist damit auf dem erfassten Bild durch unterschiedliche Intensitätsstufen der Pixel des Bildes zu sehen. Vorteilhafterweise sind die Intensitätsstufen dabei Graustufen eines Graustufenbildes. Dabei kann das Bild direkt in Graustufen aufgenommen werden oder durch Bildverarbeitung aus einem aufgenommenen Farbbild in ein Graustufenbild umgewandelt werden. Die unterschiedlichen Intensitätsstufen, insbesondere Graustufen, der einzelnen Pixel in dem aufgenommenen Bild sind, wie erläutert, durch die unterschiedlichen Lichtmenge verursacht, die von dem Bereich in dem die Schweißnaht liegt und den das Bild abbildet, reflektiert werden. Je nachdem, wie die Oberfläche der Schweißnaht, insbesondere der Schweißperle, geformt ist, wird also eine geringere oder größere Menge an Licht an einem gewissen Punkt der Oberfläche zurück in einen Strahlengang der Bilderfassungseinrichtung reflektiert, was zu einer unterschiedlichen Belichtung der Pixel des Bildes führt. Damit dienen die Intensitätsstufen (bzw. Graustufenwerte) nicht nur als ein Indikator für die reflektierte Lichtmenge, sondern über die reflektierte Lichtmenge auch als ein Maß für eine lokale Ausrichtung der Oberfläche der Schweißnaht. Mit der lokalen Ausrichtung der Oberfläche der Schweißnaht, insbesondere der Schweißperle, ist damit die Geometrie bzw. Form der Schweißnaht, also ihre Erstreckung in unterschiedliche Raumrichtungen, gemeint.

Weiter erfolgt erfindungsgemäß ein Unterteilen des Bildes in Pixel einer ersten Teilmenge und einer zweiten Teilmenge anhand ihrer Intensitätsstufen und im Vergleich zu einem zuvor festgelegten, insbesondere anhand von Referenzmessungen, die an für gut befundenen Schweißnähten (also an Schweißnähten die eine nach gewünschten Kriterien ausreichende bzw. zufriedenstellende Qualität hat) durchgeführt wurden, festgelegten, Intensitätsstufen-Schwellenwert. Möglich ist auch, das Bild durch Festlegung mehrerer Intensitätsstufen-Schwellenwerte in weitere Teilmengen von Pixeln zu unterteilen. Die Unterteilung des Bildes ermöglicht es anhand des festgelegten Intensitätsstufen-Schwellenwerts nun, dass nur noch zwei (oder mehr, aber wenige) unterschiedliche Arten bzw. Mengen von Pixeln für die Beurteilung der Schweißqualität ausgewertet werden müssen. Dies erlaubt eine vereinfachte Verarbeitung von Pixeldaten zur einfachen, schnellen und dennoch präzisen Auswertung der Schweißqualität der Schweißnaht in dem darauffolgenden Schritt des Verfahrens.

Werden die Pixel in mehrere Teilmengen unterteilt so kann die Qualitätskontrolle anhand einem Vergleich mit einem Pixel-Sollwert oder Pixel-Sollbereich einer Anzahl und/oder Lage von Pixeln der verschiedenen Teilmengen erfolgen. Dies kann wie vorliegend anhand der ersten und zweiten Teilmenge beschrieben erfolgen.

Vorzugsweise werden Graustufen als Intensitätsstufen verwendet und ein Graustufen-Schwellenwert als Intensitätsstufen-Schwellenwert verwendet. Wenn nun beispielsweise Graustufen als Intensitätsstufen eines Graustufenbildes mit 8 Bit Farbtiefe bzw. 256 Abstufungen verwendet werden, so können die einzelnen Pixel des Graustufenbildes bis zu 256 unterschiedliche Graustufen aufweisen, die jeweils infolge einer unterschiedlichen, auf die Kamera reflektierten Lichtmenge erzeugt worden sind.

Durch die Unterteilung des Bildes in Pixel von nur noch einer ersten Teilmenge (Pixel mit einer Intensitätsstufe über einem Schwellenwert, die Intensitätsstufe kann eine Graustufe sein) und zweiten Teilmenge (mit einer Intensitätsstufe gleich oder unter einem Schwellenwert, die Intensitätsstufe kann eine Graustufe sein) werden den einzelnen Pixeln statt 256 mögliche Graustufenwerte (Hierbei steht 0 als kleinster Wert für Schwarz, bzw. keine Belichtung, und 255 als größter Wert für Weiß, höchste Belichtung) jeweils nur noch einer von zwei (Anzahl der Teilmengen) Werten zugeordnet, wobei dieser Wert eine Zuordnung zur ersten Teilmenge oder zur zweiten Teilmenge ist. Die Graustufen sind eine beispielhafte, aber bevorzugte, Wahl von Intensitätsstufen. Gleichwohl ist es auch denkbar Farbtöne als Intensitätsstufen zu wählen. Teilmengen mit eigenen Schwellenwerten können auch für einzelne Farbkanäle gebildet werden.

Im Rahmen der Bildung der Teilmengen ist es möglich das aufgenommene Bild zu binarisieren. Dadurch wird ein Binärbild erhalten, welches die Unterteilung des Bildes in Pixel der ersten Teilmenge und der zweiten Teilmenge visualisiert. Der Intensitätsstufen-Schwellenwert kann für verschiedene Prozessparameter individuell angepasst werden.

Das so erzeugte Binärbild bzw. die beispielsweise in einer Tabelle speicherbare oder gespeicherte Unterteilung des Bildes in Pixel der ersten Teilmenge und der zweiten Teilmenge zeigt nun anhand der Anzahl und Lage der Pixel der ersten Teilmenge und/oder der zweiten Teilmenge die durch das Schweißen erzeugte lokale Ausrichtung der Oberfläche der Schweißnaht, insbesondere der Schweißperle, und erlaubt über die Beurteilung von Anzahl und/oder Lage der Pixel der ersten Teilmenge und/oder der zweiten Teilmenge, insbesondere der Kombination aus Anzahl und Lage, eine Beurteilung der Schweißqualität. Die Lage der Pixel meint dabei eine örtliche Lage in dem Bild bzw. den Ort der Pixel in dem Bild. Die Lage eines Pixels kann beispielsweise anhand einer Angabe von zweidimensionalen Koordinaten des Pixels in einer von orthogonal zueinander stehenden Achsen aufgespannten Bildebene des Bilds oder durch eine Angabe von Quadranten in einem über das Bild gelegten Raster angegeben werden. Für die Beurteilung wird ein optimaler Bereich von Pixeln bzw. ein Pixel-Sollbereich für die Anzahl und/oder Lage der Pixel, der insbesondere bei Soll-Schweißnähten bzw. Schweißnähten mit hoher Schweißqualität gegeben ist, für einen Vergleich mit der gegebenen Anzahl und/oder Lage der Pixel der ersten Teilmenge und/oder der zweiten Teilmenge in dem Binärbild oder der Tabelle herangezogen.

Der Pixel-Sollwert kann beispielsweise durch eine Sollanzahl der Pixel der ersten Teilmenge oder der zweiten Teilmenge vorgegeben werden, bei dessen Unterschreiten oder Überschreiten von einer ordnungsgemäßen Schweißnaht ausgegangen wird. Damit definiert ein einziger Pixel-Sollwert, wie beispielsweise eine Sollanzahl an Pixeln einer bestimmten Teilmenge eine einfach überprüfbares Qualitätskriterium. Die Sollanzahl kann eine Mindestmenge oder eine Höchstanzahl oder eine durch eine Mindestmenge und eine Höchstanzahl begrenztes Intervall sein.

Ein Pixel-Sollbereich kann eine bestimmte Vorgabe bzgl. der Lage an Pixeln einer Teilmenge im Bild sein. So kann ein Kriterium sein, dass in einem Teilbereich eines Bilds mehr oder weniger Pixel einer Teilmenge vorhanden sein müssen.

Verglichen wird damit die gegebene Schweißnaht anhand ihrer Pixel der ersten und/oder zweiten Teilmenge mit einer optimalen Sollvorgabe dieser Pixel. Liegt eine durch den Pixel-Sollbereich festgelegte, hinreichend große Übereinstimmung vor, lässt sich beurteilen, dass die Schweißqualität ausreichend ist. Anderenfalls kann die Schweißqualität als nicht ausreichend bzw. mangelhaft beurteilt werden.

Bspw. kann die Anzahl der Pixel der ersten Teilmenge mit einem Sollwert verglichen werden. Es ist auch möglich die Anzahl der Pixel der ersten Teilmenge mit in einem bestimmten Bereich des Bildes mit einem Sollwert zu vergleichen. Insbesondere kann vorgesehen sein, die Pixel in einem bestimmten vorgegebenen Bereich des Bildes bei dem Vergleich nicht zu berücksichtigen und bspw. nur die Menge der Pixel einer jeweiligen Teilmenge außerhalb dieses Bereichs zu betrachten.

Mit dem Beurteilen der Schweißqualität kann eine Bestimmung von Schweißnähten, die für in Ordnung und für nicht in Ordnung befunden werden, erfolgen.

Weitergehend ist es mit dem vorgeschlagenen Verfahren aber auch möglich, die Qualität anhand der Erkennung von weiteren Merkmalen, insbesondere der Form der Schweißperle, konkreter anzugeben. So kann beispielsweise eine Form der Schweißperle und damit beispielsweise eine Symmetrie oder Asymmetrie anhand von Lage und Anzahl der Pixel der ersten Teilmenge und/oder der zweiten Teilmenge in dem Bild bestimmt werden.

Typischerweise wird im Rahmen des erfindungsgemäßen Verfahrens die Auswertung der Schweißqualität von miteinander verschweißten Leiterelemente von Statoren von elektrodynamischen Maschinen, insbesondere Elektromotoren, insbesondere für Kraftfahrzeuge, durchgeführt.

Insbesondere sind die Leiterelemente Hairpins eines Stators einer elektrodynamischen Maschine, insbesondere eines Elektromotors. Bei der infolge der hohen Anzahl von Hairpins am Stator großen Vielzahl von Schweißnähten ermöglicht das erfindungsgemäße Verfahren eine besonders kostengünstige, schnelle und zuverlässige Qualitätskontrolle sämtlicher Schweißnähte.

Es ist möglich, dass das Bild im Rahmen der Erfindung ein Teilbereich eines übergeordneten Bilds ist, das mehrere Schweißnähte umfasst. Die Auswertung kann dann an jedem Bild (Teil des übergeordneten Bilds) erfolgen. Mit einer Aufnahme können so mehrere Schweißnähte auf einmal ausgewertet werden.

Es kann ein Schritt eines Zuschneidens des Bildes auf einen Bereich der die Schweißnaht umfasst erfolgen und die Auswertung kann nur in diesem Teilbereich durchgeführt werden. Typischerweise ist dieser Teilbereich die Abbildung der Stirnseiten der Leiterelemente und ggf. über diese hinausragende Teile der Schweißnaht. Bei mehreren Schweißnähten in dem Bild oder einem übergeordneten Bild können dabei einzelne Bereiche jeweils einer Schweißnaht zugeschnitten werden. Dadurch lässt sich die zu verarbeitende Datenmenge reduzieren und das Verfahren auch nur in dem relevanten Bereich der Schweißnaht ausführen, wodurch Fehler bei der Auswertung vermieden werden können.

Wie bereits erläutert kann vorgesehen sein, dass ein bestimmter Bereich des Bilds bei der Auswertung unberücksichtigt bleibt. Bspw. kann das ein mittiger Bereich um das Zentrum der Schweißnaht (bei einer kugelförmigen Schweißnaht an zwei Leiterelementen) sein. Hier kann man typischerweise davon ausgehen, dass quasi alle Pixel in diesem Bereich der ersten Teilmenge (starke Reflektion, hell) zuzuordnen sind, wenn die Schweißnaht wie vorgesehen ausgebildet ist. Die Einbeziehung dieser Pixel bspw. in die Betrachtung der Menge an Pixeln der ersten Teilmenge kann deren relative Genauigkeit verringern. Bspw. kann man den Bereich, der bei der Auswertung außen vorgelassen wird als einen Bereich definieren, in dem die Oberfläche einer wie vorgesehen ausgebildeten Schweißnaht im wesentlichen "flach" also orthogonal zur Blickrichtung der Bilderfassungseinrichtung verläuft. Vereinfacht ausgedrückt, dies ist vorteilhaft, weil das Zentrum der Schweißperle im Bild aufgrund der Reflexion des Beleuchtungslichts hell erscheint und überwiegend dem hellen Bereich zugeordnete Pixel der ersten oder zweiten Teilmenge beinhaltet. Sollten einzelne Pixel in diesem Bereich aus verschiedenen Gründen dennoch nicht der ersten Teilmenge (hell) zugeordnet werden, so hat dies typischerweise keine Aussagekraft bzgl. der Oberflächenneigung. Bezieht man diese Pixel in eine Betrachtung mit ein, so kann dies das Ergebnis ungenauer machen. Mit anderen Worten, durch ein Nichtbeachten eines Bereichs, der bei einer wie vorgesehen ausgebildeten Schweißnaht quasi vollständig einer Teilmenge zuzuordnen ist, kann man die Sensitivität der Kontrolle in kritischen Bereichen erhöhen.

Dabei ist der zentrale Bereich vorzugsweise ein runder oder elliptischer Bereich mit einem vorgegebenen Radius, in den bei ordnungsgemäßer Schweißnaht bspw. eine vorgegebene Mindestanzahl von Pixeln der ersten Teilmenge (hell) fällt bzw. in dem ein hoher Grad an Reflektion vorliegt. Eine ordnungsgemäße Schweißnaht ist dabei als eine Schweißnaht zu verstehen, die eine vorgegebene Schweißqualität, insbesondere Mindestqualität, aufweist. Bei einer Schweißnaht, die drei oder mehr Leiterelemente verbindet ist der zentrale Bereich, der bei der Auswertung unberücksichtigt bleibt, typischerweise elliptisch, da die Schweißnaht nicht rund, sondern länglich erstreckt ist.

Eine ordnungsgemäße Schweißnaht kann bspw. eine bestimmte Menge an Pixeln der ersten Teilmenge oder eine bestimmte Menge an Pixeln der ersten Teilmenge außerhalb eines bei der Auswertung nicht berücksichtigten Bereichs aufweisen.

Eine ordnungsgemäße Schweißnaht kann bspw. auch eine bestimmte Symmetrie in der Verteilung der Pixel der ersten und zweiten Art aufweisen (Pixel-Sollbereich).

Die maximale Anzahl von Pixeln der ersten Teilmenge oder der zweiten Teilmenge kann dabei beispielsweise absolut oder relativ in Bezug auf die Gesamtheit der Pixel der ersten Teilmenge oder der zweiten Teilmenge angegeben werden. Die maximale Anzahl kann aus einer Stichprobe von ordnungsgemäßen Schweißnähten bzw. Schweißnähten mit hinreichender Schweißqualität ermittelt werden. So kann beispielsweise bei einem runden Bereich, wie er insbesondere bei zwei miteinander verschweißten Leiterelementen zweckmäßig ist, ein Radius für den zentralen Bereich vorgegeben werden, sodass im Durchschnitt bzw. Mittel der Stichproben eine Mindestmenge, beispielsweise 90%, aller Pixel der ersten Teilmenge oder der zweiten Teilmenge im ausgeschnittenen zentralen Bereich liegen. Alternativ kann der ausgeschnittene Bereich elliptischer Form sein, wenn mehr als zwei Leiterelemente miteinander verschweißt sind und davon ein Bild aufgenommen wird.

Vorteilhafterweise kann der Pixel-Sollwert der Anzahl und/oder der Pixel-Sollbereich der Lage durch eine Auswahl eines Mindest-Anbindungsquerschnitts als Qualitätsmerkmal der Schweißqualität festgelegt werden. Dies kann durch einen separaten Festlegungsschritt in dem Verfahren erfolgen. Dieser Schritt beruht auf der Erkenntnis, dass die Anzahl und/oder Lage der Pixel der ersten Teilmenge und/oder zweiten Teilmenge mit dem Anbindungsquerschnitt korreliert und demnach ein Mindest-Anbindungsquerschnitt darüber festgelegt werden kann.

Folglich können vorteilhafterweise für die Festlegung des Pixel-Sollwerts der Anzahl und/oder des Pixel-Sollbereichs der Lage Daten genutzt werden, durch die eine Anzahl und/oder Lage von Pixeln der ersten Teilmenge und/oder der zweiten Teilmenge mit Anbindungsquerschnitten von Schweißnähten korreliert ist. Beispielsweise können dabei Anbindungsquerschnitte von unterschiedlichen Schweißnähten, etwa durch Querschliff, ermittelt werden und mit der Anzahl und/oder Lage von Pixeln der ersten Teilmenge und/oder zweiten Teilmenge in Relation gesetzt werden, um eine Datenbank zu erhalten, die für die Festlegung des Pixel-Sollwerts der Anzahl und/oder des Pixel-Sollbereichs der Lage anhand des gewünschten Mindest-Anbindungsquerschnitts genutzt werden kann.

Für die Bestimmung der Schweißqualität ist es grundsätzlich möglich, nur die Anzahl, nur die Lage oder die Kombination aus Anzahl und Lage der Pixel der ersten Teilmenge und/oder der zweiten Teilmenge auszuwerten. Beim letzteren wird dabei die Anzahl der Pixel der ersten Teilmenge und/oder zweiten Teilmenge in Abhängigkeit ihrer Lage auf der Oberfläche der Schweißnaht berücksichtigt.

Vorteilhafterweise kann dabei eine Schweißsymmetrie der Schweißnaht anhand der Anzahl und Lage der Pixel der ersten Teilmenge und/oder zweiten Teilmenge bestimmt werden. Mit einer Schweißsymmetrie ist eine Symmetrie der Schweißnaht, insbesondere Schweißperle, bezüglich einer oder mehrerer gedachter Symmetrielinien durch die Schweißnaht, insbesondere Schweißperle, gemeint. Durch eine hohe Ungleichverteilung von Pixeln der ersten Teilmenge oder der zweiten Teilmenge zu je einer Seite der Symmetrielinie kann eine unsymmetrische Schweißperlenform erkannt werden. Eine zu starke Asymmetrie lässt auf eine mangelhafte Schweißqualität schließen.

Es kann vorgesehen sein, dass abhängig von der Anzahl und Lage der Pixel der ersten Teilmenge und/oder der zweiten Teilmenge ein Nachschweißen der Schweißnaht erfolgt. Wenn beispielsweise eine infolge ungleichmäßigen Energieeintrags beim Schweißen erzeugte unsymmetrische Schweißperle erkannt wird, kann ein gezieltes Nachschweißen erfolgen, um eine symmetrische Schweißperle zu erzeugen. Abhängig von der Anzahl und Lage an Pixeln der ersten Teilmenge oder der zweiten Teilmenge kann dabei die Geometrie der Schweißperle erkannt werden, sodass diese Geometrie für das Nachschweißen herangezogen werden kann, um die gewünschte Kugelform der Schweißperle nachträglich noch erzeugen zu können. Wenn wiederum die Anzahl von Pixeln der ersten Teilmenge oder der zweiten Teilmenge im gesamten Randbereich der Schweißperle zu hoch ist, kann wiederum eine zu flache Schweißperle erkannt werden, sodass hier ein Nachschweißen im gesamten Randbereich erfolgen kann, um die Kugelform der Schweißperle nachzubearbeiten und die Schweißqualität zu erhöhen. Der Randbereich der Schweißperle kann dabei als die Oberfläche der Stirnseiten der miteinander verschweißten Leiterelemente abzüglich des zuvor erwähnten, insbesondere ausgeschnittenen, zentralen Bereichs aufgefasst werden. Damit wird mittels des Verfahrens nicht nur eine Qualitätskontrolle, sondern eine einfache, schnelle und präzise Nachbearbeitung des Bauteils zur Vermeidung von Ausschussware ermöglicht.

Dabei kann eine Schweißenergie für das Nachschweißen in Abhängigkeit von der Anzahl und/oder Lage der Pixel der ersten Teilmenge oder der zweiten Teilmenge gewählt werden. Dies ermöglicht das Steuern nicht nur des Ortes, sondern auch der Intensität des Energieeintrags des Laserstrahls beim Nachschweißen und ermöglicht damit das präzise Erzeugen einer qualitätsoptimierten Schweißnaht.

Vorteilhaft ist ferner, wenn zeitgleich ein Auswerten einer Schweißqualität einer Schweißnaht und ein Schweißen einer anderen Schweißnaht an demselben Bauteil, insbesondere Stator, mit mehreren Leiterelementen erfolgt. Durch das parallele Schweißen und Auswerten wird eine weitere Zeitersparnis bei der Herstellung des Bauteils ermöglicht. Alternativ sind ein abwechselndes Auswerten und Schweißen möglich.

Auch wird die eingangs erwähnte Aufgabe durch eine Vorrichtung gelöst zum Auswerten einer Schweißqualität einer Schweißnaht zwischen Endabschnitten von zumindest zwei länglich erstreckten Leiterelementen, welche durch Bestrahlung ihrer Stirnseiten miteinander verschweißt sind. Die Vorrichtung weist auf: eine Bilderfassungseinrichtung mit einem Strahlengang. Die Bilderfassungseinrichtung ist zur Durchführung des Schritts (a) des erfindungsgemäßen Verfahrens ausgebildet. Weiter weist die Vorrichtung zumindest eine Datenverarbeitungsanlage auf, die zur Durchführung der Schritte (b) und (c) des erfindungsgemäßen Verfahrens eingerichtet ist.

Die Vorrichtung umfasst eine Beleuchtungseinrichtung, die eingerichtet ist, um die Stirnseiten der Leiterelemente aus Richtung entlang des Strahlengang der Bilderfassungseinrichtung zu beleuchten.

Die Vorrichtung umfasst weiter eine Laserstrahlquelle mit einem Strahlengang des Laserstrahls zur Durchführung des Schweißvorgangs zur Verbindung der Leiterelemente auf Ihrer Stirnseite. Insbesondere sind der Strahlengang der Bilderfassungseinrichtung und der Strahlengang des Laserstrahls, insbesondere mittels eines Strahlteilers, ineinander gekoppelt. Die Strahlengänge verlaufen also gleich. Die Bilderfassungseinrichtung ermöglicht damit einer Auswertung aus dem gleichen "Blickwinkel" aus dem auch der Laser bearbeitet.

Bei Durchführung des Verfahrens erfolgt das Erfassen des Bildes daher bevorzugt entlang des Strahlengangs des Lasers, der für den Schweißvorgang genutzt wurde. Die Beleuchtung der Schweißnaht erfolgt vorzugsweise parallel zu bzw. entlang diesem Strahlengang.

Dabei weist die erfindungsgemäße Vorrichtung dieselben Vorteile auf, wie sie ausführlich mit Bezug auf das erfindungsgemäße Verfahren erläutert worden sind. Zudem können hierin beschriebene Merkmale, die in Bezug auf das Verfahren erläutert worden sind, gleichermaßen auf die Vorrichtung angewendet werden. Insbesondere kann die Vorrichtung zur Ausführung des hierin beschriebenen Verfahrens eingerichtet sein.

Die Erfindung wird im Folgenden anhand der Figuren beispielhaft näher beschrieben, wobei gleiche oder funktional gleiche Elemente ggf. lediglich einmal mit Bezugszeichen versehen sind.

Es zeigen:

Figur 1      eine schematische Darstellung eines Ausführungsbeispiels einer erfindungsgemäßen Vorrichtung;

Figuren 2a, 2b      eine schematische Seitenansicht und Draufsicht auf zwei Leiterelemente eines Stators aus Fig. 1 vor dem Schweißen;

Figuren 3a, 3b      eine schematische Seitenansicht und Draufsicht auf zwei Leiterelemente aus Fig. 2a, 2b nach dem Schweißen;

Figur 4      eine schematische Darstellung von Schritten eines Ausführungsbeispiels eines erfindungsgemäßen Verfahrens zum Auswerten der Schweißqualität einer Schweißnaht an zwei Leiterelementen des Stators aus Fig. 1;

Figur 5      eine schematische Darstellung von Schritten eines Ausführungsbeispiels eines erfindungsgemäßen Verfahrens zum Auswerten der Schweißqualität einer anderen Schweißnaht von zwei Leiterelementen des Stators aus Fig. 1;

Figur 6      eine schematische Darstellung von Binärbildern von mit unterschiedlicher Laserleistung geschweißten Schweißnähten und der Schweißperlen der Schweißnähte von je zwei Leiterelementen des Stators aus Fig. 1; und

Figur 7      eine schematische Darstellung von der Anzahl von weißen Pixeln je Schweißperle für eine Vielzahl von Schweißperlen von Paaren von Leiterelementen des Stators aus Fig. 1.

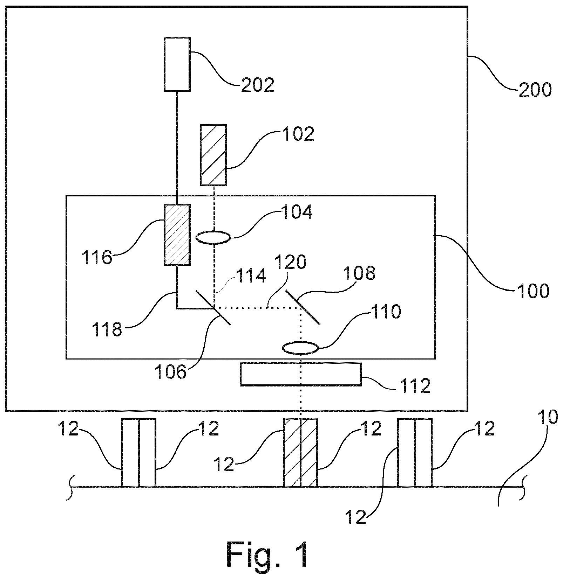

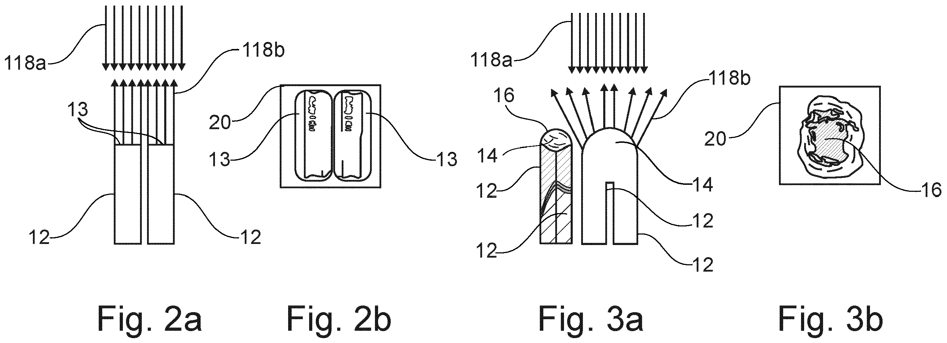

Figur 1 zeigt ein Ausführungsbeispiel einer Vorrichtung 200 zum Auswerten einer Schweißqualität einer Schweißnaht 14 (siehe Fig. 3a). Die Vorrichtung 200 ist vorliegend auch zum Erzeugen der Schweißnaht 14 durch Laserstrahlschweißen mittels einer Laserstrahlquelle 102 und einer Scanneroptik 100 eingerichtet.

Die Scanneroptik 100 umfasst neben einer Strahlführung der Laserstrahlquelle 102 (Strahlengang 114) eine Bilderfassungseinrichtung 116, die im Folgenden auch als Kamera 116 bezeichnet wird. Der Strahlengang 118 der Kamera 116 dient der Lageerkennung von vorliegend je zwei (alternativ mehr) zu verschweißenden Leiterelementen 12 eines Bauteils 10 vor dem eigentlichen Laserstrahlschweißen und damit dem präzisen Laserstrahlschweißen von freien Endabschnitten der jeweils zwei Leiterelementen 12 des Bauteils 10 mit dem Strahlengang 114 der Laserstrahlquelle 102.

Bei dem Bauteil 10 handelt es sich vorliegend um einen Stator 10 mit Hairpins (I-Pins oder andere Steckspulen sind im Rahmen der Erfindung ebenso bevorzugte Leiterelemente) als Leiterelemente 12 eines Elektromotors. Die Leiterelemente 12 können für eine hohe elektrische Leitfähigkeit beispielsweise aus Kupfer bestehen oder zumindest Kupfer aufweisen.

Die Strahlengänge 114, 118 werden an einem Strahlteiler 106 in einem gemeinsamen Strahlengang 120 überlagert bzw. koaxial miteinander geführt. Der Strahlengang 114 des Lasers 102 wird dabei vor dem Strahlteiler 106 durch eine Kollimationslinse 104 kollimiert. Ein oder mehrere bewegliche Umlenkspiegel 108 der Scanneroptik 100 ermöglichen eine Verlagerung des koaxial kombinierten Strahlengangs 120 in einer Ebene auf der Oberfläche der Endabschnitte der Leiterelemente 12. In Strahlrichtung hinter dem Umlenkspiegel 108 sind zudem eine Fokussierlinse 110, die auch als ein Linsenpaket ausgeführt sein kann, zum Fokussieren des Strahlengangs 120 auf die beiden Endabschnitte der Leiterelemente 12 und eine zusätzliche Beleuchtungseinheit 112 der Vorrichtung 200 zum Belichten der Endabschnitte der Leiterelemente 12 für die Kamera 116 angeordnet.

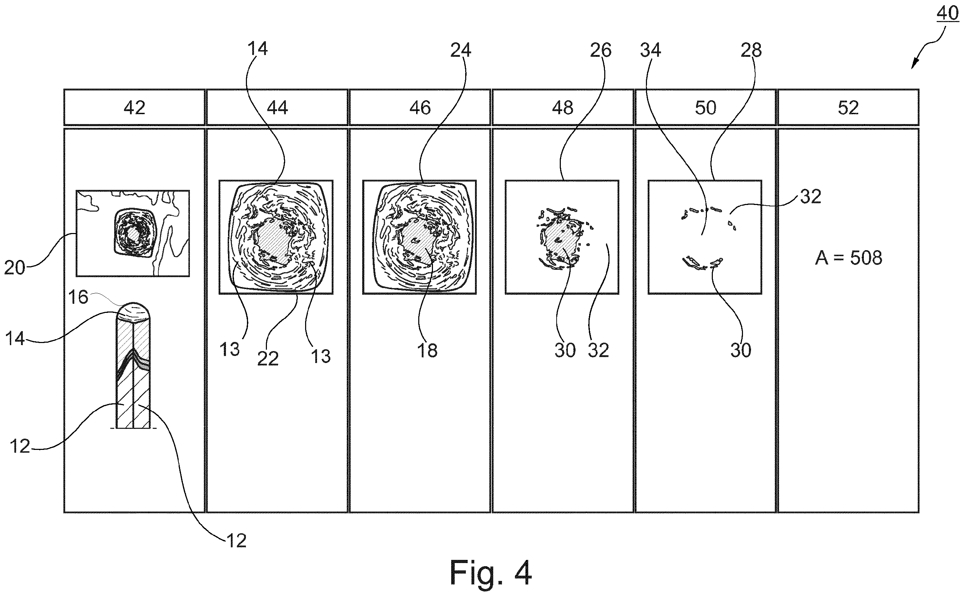

Die Kamera 116 der Scanneroptik 100 wird nicht nur zur Prozessführung des Laserstrahlschweißens genutzt, sondern entsprechend dem im Folgenden beschriebenen Verfahren 40 (siehe Fig. 4) auch im Rahmen des Auswertens der Schweißqualität der Schweißnaht 14 für eine Bildaufnahme genutzt. Alternativ kann auch eine zusätzliche Kamera (nicht gezeigt) Verwendung finden. Neben den sich daraus ergebenden und im Folgende näher beschriebenen Vorteilen bezüglich des Verfahrens 40 hat dies auch den Vorteil, dass keine zusätzliche und kostenintensive Ausstattung erforderlich ist, um die Schweißqualität prüfen zu können, sondern die bereits für das Schweißen vorhandenen Mittel genutzt werden können. Auch eine oder mehrere Datenverarbeitungsanlage 202, die auch als Computer 202 bezeichnet wird, der Vorrichtung 200, dessen Funktion später näher erläutert wird, kann bzw. können bereits vorhanden sein oder aber hinzugefügt werden.

Figur 2a zeigt anhand eines noch ungeschweißten Paares von länglich erstreckten Leiterelementen 12 bzw. Hairpins wie Licht 118a des Strahlengangs 118 der Kamera 116 bzw. der Beleuchtungseinheit 112 auf die Oberfläche von Stirnseiten 13 von ungeschweißten Endabschnitten der Leiterelemente 12 einfällt. Dieses Licht 118a wird an den Stirnseiten 13 auf den ungeschweißten Endabschnitten als Licht 118b senkrecht zurückreflektiert, weil die Stirnseiten 13 der Endabschnitte der Leiterelemente 12 senkrecht zur Richtung des Lichts 118a stehen. In Figur 2b ist ein schematisches Bild 20 gezeigt, das von der Kamera 116 aufgenommen worden ist und die beleuchteten Stirnseiten 13 der Endabschnitte der Leiterelemente 12 zeigt.

Figur 3a zeigt demgegenüber anhand eines geschweißten Paares von Endabschnitten von länglich erstreckten Leiterelementen 12 bzw. Hairpins, wie Licht 118a des Strahlengangs 118 der Kamera 116 auf die Stirnseiten 13 von geschweißten Endabschnitten der Leiterelemente 12 einfällt. Die Stirnseiten 13 sind im Gegensatz zu den Fig. 2a und 2b hier nicht mehr separat zu erkennen bzw. wurden durch das Schweißen miteinander verbunden (gleichwohl wird hierin weiterhin auf die Stirnseiten 13 Bezug genommen). Das Licht 118a trifft hier auf eine durch das Laserstrahlschweißen mittels der Laserstrahlquelle 102 erzeugte Schweißperle 16 der Schweißnaht 14, die an den Stirnseiten 13 beide Endabschnitte der Leiterelemente 12 miteinander verbindet.

Die Schweißperle 16 ist dabei kugelförmig ausgebildet. Vorliegend kann von einer hohen Schweißqualität ausgegangen werden, weil die Kugelform der Schweißperle 16 gleichmäßig ausgebildet ist und dadurch von einem hohen Anbindungsquerschnitt zwischen den Leiterelementen 12 bzw. ihren Enden ausgegangen werden kann. Anders als in Fig. 2a wird hier das Licht 118a nicht zentrisch reflektiert. Stattdessen wird reflektiertes Licht 118b überwiegend in einem mittleren bzw. zentralen Bereich der Schweißperle 16 zurück auf die Kamera 116 reflektiert und ansonsten überwiegend nach außerhalb gestreut. Je stärker die Kugelform der Schweißperle 16 ausgebildet ist, desto mehr Fläche der Schweißperle 16 ist dabei schräg gegenüber der Einfallrichtung des Lichts 118a, sodass weniger Licht 118b auf die Kamera 116 zurückreflektiert wird und von dieser bei der Aufnahme eines Bilds 20 erfasst wird. Je flacher die Schweißperle 16 hingegen ist, desto schwächer und dadurch instabiler ist sie. Bei einer flachen Schweißperle 16, die eine schlechte Schweißqualität wegen einem geringen Anbindungsquerschnitt der Schweißnaht 14 anzeigt, wird mehr Licht 118b auf die Kamera 116 reflektiert und bei der Aufnahme des Bildes 20 erfasst.

Durch unterschiedliche Anteile bzw. Mengen an Lichtreflektion kann auf die Form der Schweißperle 16, damit den Anbindungsquerschnitt und somit die durch den Anbindungsquerschnitt bestimmte Schweißqualität der erzeugten Schweißnaht 14 zurückgeschlossen werden. Das im Folgenden beschriebene Verfahren 40 macht sich diese Korrelation zwischen der Form der Schweißperle 16 und der der damit verbundenen Schweißqualität der Schweißnaht 14 mit dem Licht im von der Kamera 116 aufgenommenen Bild 20 zu Nutze. Figur 3b zeigt dabei ein von der Kamera 116 aufgenommenes Bild 20 der Stirnseiten 13 der geschweißten Endabschnitte der Leiterelemente 12, wobei die Schweißperle 16 hier gut zu sehen ist und die Pixeldichte des Bildes 20 nach außen bzw. zu einem Randbereich der Schweißperle 16 hin abnehmen.

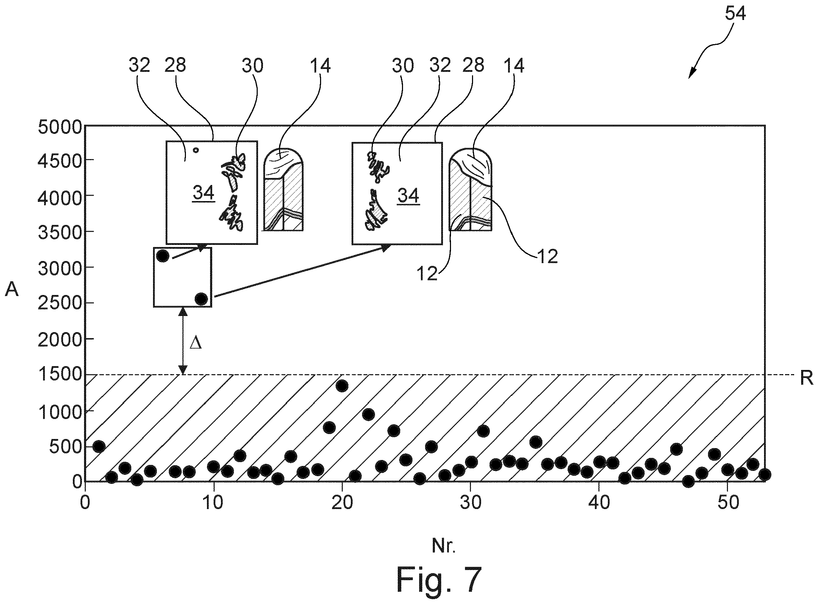

Figur 4 zeigt nun einen Ablauf eines beispielhaften erfindungsgemäßen Verfahrens 40 zum Auswerten der Schweißqualität eines an ihren Endabschnitten geschweißten Paars von Leiterelementen 12. Das hier beispielhaft beschriebene Verfahren 40 umfasst dabei die Verfahrensschritte 42, 44, 46, 48, 50, 52 sowie 54 (siehe Fig. 7), wobei einige der aufgezählten Verfahrensschritte, wie zuvor hierin beschrieben worden ist, lediglich vorteilhaft aber nicht zwingend notwendig sind.

In einem ersten Verfahrensschritt 42 erfolgt das Aufnehmen eines Bildes 20 von der Schweißnaht 14 mittels der mit ihrem Strahlengang 118 oberhalb der Schweißperle 16 der Schweißnaht 14 bzw. ihrer Schweißperle 16 positionierten Kamera 116. Obwohl an dieser Stelle und im Folgenden lediglich von einer Schweißperle 16 bzw. einer Schweißnaht 14 gesprochen wird, ist es auch möglich, ein Bild 20 mit einem größeren Bereich des Bauteils 10 aufzunehmen, welches mehrere Schweißperlen 16 bzw. Schweißnähte 14 umfasst, sodass mehrere Schweißperlen 16 zumindest zeitweise gleichzeitig hinsichtlich ihrer Schweißqualität ausgewertet werden können und das Verfahren 40 besonders schnell durchführbar ist.

Das aufgenommene Bild 20 umfasst einen Bereich, der größer als die Schweißnaht 14 ist, sodass das Bild 20 in einem zweiten Verfahrensschritt 44 zugeschnitten wird, um ein auf einen Bereich der Schweißnaht 14 zugeschnittenes Bild 22 zu erhalten. Von oben (also aus der Blickrichtung der Kamera 116 beim Blick senkrecht auf die Stirnseiten 13) sind die einzelnen Leiterelemente 12 und ihre Stirnseiten 13, die hier nur angedeutet sind, nicht mehr zu erkennen, stattdessen ist die Schweißperle 16 von oben zu sehen.

In einem dritten Verfahrensschritt 46 erfolgt eine Festlegung eines Intensitätsstufen-Schwellenwertes in Form eines Graustufenwerts (bei einem Farbbild ist auch ein Farbwert möglich) für das zugeschnittene Bild 22, das Bild 20 wurde dabei im Verfahrensschritt 40 als Grauwertbild aufgenommen. Diese Intensitätsstufen-Schwellenwertfestlegung dient im vorliegenden Beispiel dem anschließenden Binarisieren nach einem Schwellenwertverfahren im vierten Verfahrensschritt 48.

Mit dem festgelegten Schwellwert werden die Pixel des zugeschnittenen Bilds 22 in zwei Teilmengen unterteilt. Pixel der ersten Teilmenge 30 sind Pixel, deren Intensitätsstufen größer dem festgelegten Intensitätsstufen-Schwellenwert sind. Diese Pixel sind in einem Graustufen Bild also helle Pixel, bzw. Pixel an Stellen an denen viel Licht in Richtung der Kamera zurückreflektiert wurde. Pixel der zweiten Teilmenge 32 sind Pixel, deren Intensitätsstufe kleiner oder gleich dem Intensitätsstufen-Schwellenwert ist.

In einem Schwellenwertbild 24 sind hierzu nur noch die Pixel bzw. Bereiche 18 des zugeschnittenen Bildes 22 gekennzeichnet, die über dem festgelegten Intensitätsstufen-Schwellenwert liegen (Pixel der ersten Teilmenge 30. Die restlichen Pixel im Schwellenwertbild 24 liegen unter oder auf dem Schwellwert und gehören derer zweiten Teilmenge 32 an.

In dem vierten Verfahrensschritt 48 wird ein Binärbild 26 mit weißen Pixeln der ersten Teilmenge 30 und schwarzen Pixeln der zweiten Teilmenge 32 erzeugt. Der Intensitätsstufen-Schwellenwert, der vorliegend ein Graustufen-Schwellenwert ist, kann für verschiedene Beleuchtungseinheiten 112 individuell angepasst werden. Alle Pixel oberhalb des Schwellenwerts werden also zu weißen Pixeln zusammengefasst, während alle Pixel auf oder unter dem Schwellenwert zu schwarzen Pixeln zusammengefasst werden. Die "Farbtiefe" wird also reduziert. Zusätzlich kann zur besseren optischen Erkennbarkeit für einen Benutzer, der den Erkennungsprozess überwacht, eine Invertierung der Farben erfolgen.

Eine Auswertung der Bilder kann auch ohne eine Binarisierung und direkt nach der Schwellwertanalyse erfolgen.

Aus dem so erhaltenen Binärbild 26 wird nun in einem fünften Verfahrensschritt 50 ein zentraler Bereich 34 ausgeschnitten, sodass ein wiederum zugeschnittenes Binärbild 28 erhalten wird. Das zentrale Bereich 34 kann bei der nachfolgenden Auswertung auch einfach außen vor gelassen werden und muss nicht tatsächlich ausgeschnitten werden. Denn der zentrale Bereich 34 erscheint aufgrund der Reflektion hell und beinhaltet ohnehin überwiegend weiße Pixel der ersten Teilmenge 30, sodass er typischerweise keinen Aufschluss über die Schweißqualität der Schweißnaht 14 gibt. Der Ausschnitt des zentralen Bereichs 34 kann dabei der Kugelform der Schweißperle 16 folgend rund sein. Der Radius des runden Ausschnitts ist abhängig von den verwendeten Abmessungen der Leiterelemente 12 bzw. ihrer Endabschnitte und der Schweißstrategie. Bei der Verbindung von mehr als 2 Leiterelementen wird typischerweise statt einem kreisförmigen Bereich ein elliptischer zentraler Bereich 34 ausgeblendet. Den Radius (bei einem kreisförmigen zentralen Bereich 34) kann man auf unterschiedliche Art und Weise definieren. Ein Beispiel ist, dass Bilder 20 von Schweißnähten 14 mit hinreichender Schweißqualität herangezogen werden und berücksichtigt wird, wie groß der Radius sein muss, damit eine bestimmte Menge, beispielsweise 90%, aller weißen Pixel der ersten Teilmenge 30 im runden Ausschnitt liegen. Daraus kann ein Mittelwert gebildet werden, der dann als Radius des runden, zentralen Bereichs 34 definiert werden kann. Vorteilhafterweise kann so die zu verarbeitende Datenmenge für das Verfahren 40 reduziert werden.

Dann kann in einem sechsten Verfahrensschritt 52 die Anzahl A der weißen Pixel, bzw. der Pixel der ersten Teilmenge 30 in dem zugeschnittenen Binärbild 28 gezählt werden. In diesem Beispiel der Schweißnaht 14 in dem zugeschnittenen Binärbild 28 der Fig. 4 beträgt die Anzahl A = 508 weiße Pixel der ersten Teilmenge 30.

Schließlich erfolgt in einem siebten Verfahrensschritt 54, wie er in Fig. 7 gezeigt ist, eine Bestimmung der Schweißqualität der Schweißnaht 14 anhand eines Vergleichs mit einem Pixel-Sollwert bzw. Pixel-Sollbereich. Beispielhaft ist der Pixel- Sollwert in Fig. 7 besonders einfach durch einen Referenzwert R in Form einer Anzahl von weißen Pixeln der ersten Teilmenge 30 gegeben, die hier R = 1.500 weiße Pixel, also Pixel der ersten Teilmenge 30 beträgt. So kann bei einer Anzahl A = 508 weißen Pixeln der ersten Teilmenge 30, darauf geschlossen werden, dass die Schweißperle 16 hinreichend kugelförmig ausgebildet ist, um eine hinreichend hohe Schweißqualität zu gewährleisten, weil im Randbereich der Schweißperle 16 weniger als 1.500 weiße Pixel der ersten Teilmenge 30 erscheinen, also in Form von Licht zurück an die Kamera 116 reflektiert werden.

Eine Anzahl über 1.500 weißen Pixeln der ersten Teilmenge 30 würde hingegen dafür sprechen, dass die Schweißperle 16 eher flach als kugelförmig ausgebildet ist, weil im Randbereich der Schweißnaht 14 zu viel Licht an die Kamera 116 zurückreflektiert wird, welches durch das Binarisieren als weiße Pixel der ersten Teilmenge 30 erfasst wird. Mögliche Ursachen dafür können beispielsweise eine falsche Positionierung des Strahlengangs 114 der Laserstrahlquelle 102, eine zu geringe Leistung der Laserstrahlquelle 102, eine zu kurze Schweißzeit und ein zu großer Spalt zwischen den Endabschnitten der Leiterelemente 12 sein. Folglich kann eine mangelhafte Schweißqualität bestimmt werden.

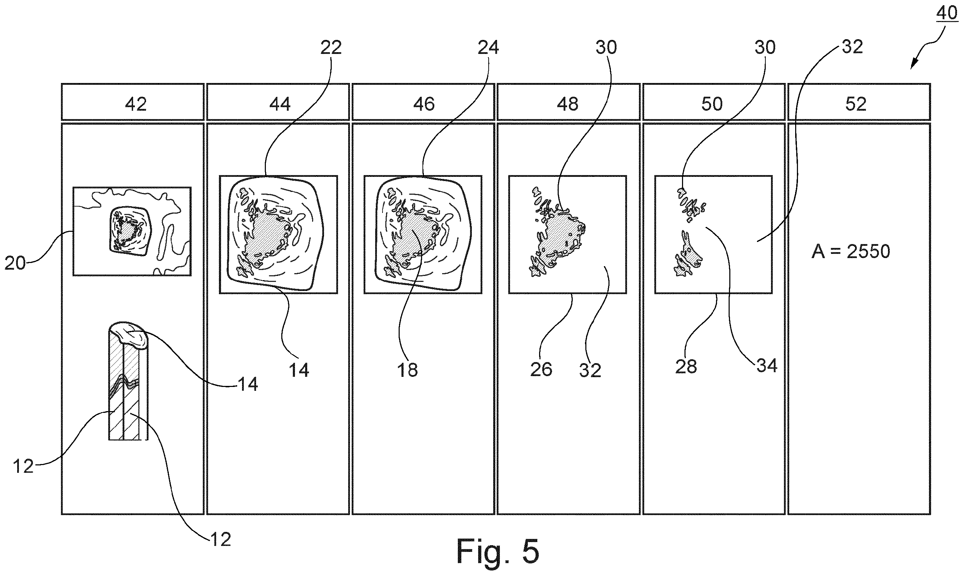

Neben dieser auf einer quantitativen Bestimmung von weißen Pixeln der ersten Teilmenge 30 beruhenden Bestimmung von einer qualitativ hochwertigen bzw. ordnungsgemäßen Schweißnaht 14 und einer nicht ordnungsgemäßen bzw. qualitativ mangelhaften Schweißnaht 14 bei der Bestimmung der Schweißqualität sind auch weitergehende qualitative, insbesondere ortsabhängige, Bestimmungen möglich, wie es beispielsweise durch das Ausführungsbeispiel des Verfahrens 40 der Fig. 5 gezeigt wird.

In der Fig. 5 ist zu sehen, dass die Schweißperle 16 asymmetrisch ausgebildet ist, sodass sie zu einem der beiden Leiterelemente 12 hin geneigt ist. Neben der sehr hohen Anzahl von A = 2.550 weißen Pixeln der ersten Teilmenge 30 im zugeschnittenen Binärbild 28 ist dies dadurch erkennbar, dass die weißen Pixel der ersten Teilmenge 30 nur oder weit überwiegend auf einer Seite des Randbereichs der Schweißperle 16 in dem zugeschnittenen Binärbild 28 zu sehen sind. Daraus kann geschlossen werden, dass hier eine asymmetrische Schweißperle 16 vorliegt, wie sie auch in Fig. 5 abgebildet ist. Beispielsweise könnte ein derartiger durch eine Soll-Bereichs Prüfung detektiert werden. Bspw. kann geprüft werden ob in den einzelnen Quadranten des Binärbilds 28 jeweils eine bestimmte Menge an Pixeln der ersten Teilmenge vorhanden ist. Auch kann auf eine bestimmte Form der Verteilung der Pixel der ersten Teilmenge geprüft werden.

Das Auswerteverfahren 40 kann dabei von zumindest einem Computer 202 gesteuert werden, der Teil der Vorrichtung 200 ist und, wie gezeigt, mit der Kamera 116 verbunden sein kann, um das jeweilige Aufnehmen des Bildes 20 sowie die weiteren Verfahrensschritte des Verfahrens 40 auszuführen.

Der zumindest eine Computer 202 kann im Übrigen auch mit einer nicht gezeigten Steuervorrichtung der Laserstrahlquelle 102 verbunden sein, um dieser die aus dem Verfahren 40 gewonnenen Informationen über die Schweißperle 16 zu übermitteln und/oder die Laserstrahlquelle 102 zu steuern. Dadurch kann der Laserstrahlquelle 102 beispielsweise die Information der asymmetrischen Schweißperle 16 gegeben werden, sodass die Vorrichtung 200 daraufhin ein Nachschweißen derart im anhand der fehlenden weißen Pixel der ersten Teilmenge 30 erkannten Bereich unzureichender Schweißung vornehmen kann, dass die Schweißperle 16 durch das Nachschweißen symmetrisch und kugelförmig wird. Mit anderen Worten bestimmen die Anzahl A und die Lage der weißen Pixel der ersten Teilmenge 30 den Ort und vorzugsweise auch die Höhe des Energieeintrags beim Nachschweißen mittels der Laserstrahlquelle 102.

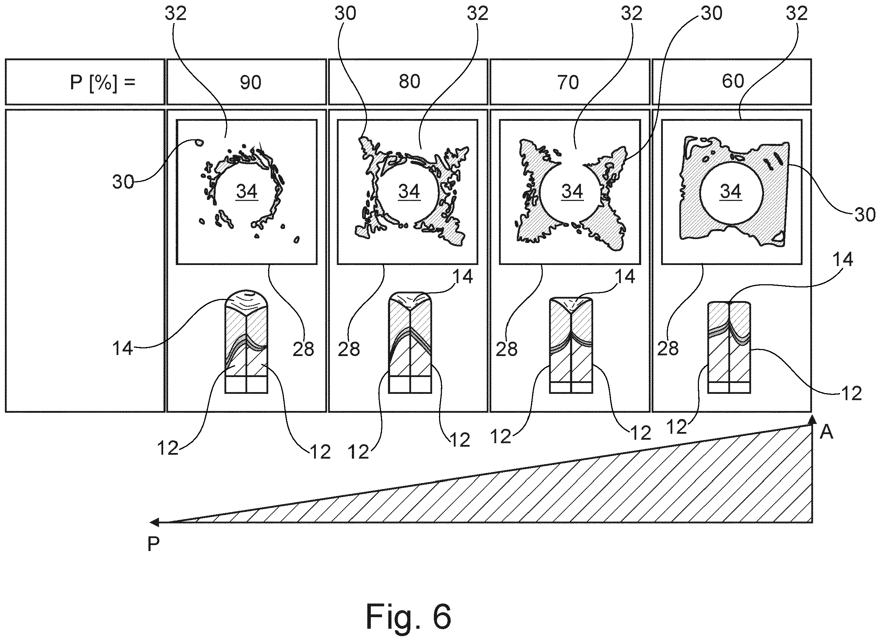

Figur 6 zeigt zugeschnittene Binärbilder 28 und zugehörige Schweißperlen 16 bei beispielhaften, unterschiedlichen Laserleistungen P (Angabe in % der Maximalleistung) der Laserstrahlquelle 102 bei gleicher Schweißzeit. Daran ist zu erkennen, dass die gewählte Laserleistung P, und hierneben im Übrigen eine Dauer, beim Laserstrahlschweißen einen erheblichen Einfluss auf die Ausbildung der Schweißperle 16 und damit die Schweißqualität der Schweißnaht 14 hat. Mit abnehmender Laserleistung P wird die Schweißperle 16 zunehmend flacher und die Anzahl A der weißen Pixel der ersten Teilmenge 30 im Randbereich der Schweißnaht 14 nimmt zu. Der Anbindungsquerschnitt der Schweißnaht 14 nimmt entsprechend ab und die Schweißnaht 14 wird instabil und kann der Belastung im Betrieb des Stators 10 im Elektromotor womöglich nicht standhalten.

Ist eine über dem Referenzwert R bzw. Soll-Wert liegende Anzahl von weißen Pixeln der ersten Teilmenge 30 eher gleichmäßig um den zentralen Bereich 34 herum verteilt, z.B. wegen zu geringer Laserleistung oder zu kurzer Schweißzeit, wie dies in der Fig. 6 zu sehen ist, kann dies mittels des Verfahrens 40 nicht nur erkannt werden, sondern auch kann das gesamte Paar von Leiterelementen 12 nochmals verschweißt werden. Dies kann beispielsweise über eine Pixel-Sollbereichs Analyse erfolgen oder einen separaten Analyse Schritt zur Bestimmung einer nötigen Nachbearbeitung der Schweißnaht. Hier kann die örtliche Verteilung der einzelnen Pixel der einzelnen Teilmengen im Detail analysiert werden um detailliertere Rückschlüsse auf die Form und Lage der vorhanden Schweißnaht zu ziehen und weiter den optimalen Ort und die optimale Höhe eines zusätzlichen Energieeintrags zu bestimmen. Hierbei kann die Anzahl der verbleibenden weißen Pixel der ersten Teilmenge 30 den Energieeintrag beim Nachschweißen bestimmen.

Die bereits teilweise erläuterte Figur 7 zeigt eine Vielzahl von Nummern (Nr.) von Paaren von Leiterelementen 12 an dem Stator 10, die verschweißt worden sind. Dabei sind zwei Ausreißer von verschweißten Leiterelementen 12 gezeigt, die eine deutliche Differenz Δ in der Anzahl A von weißen Pixeln der ersten Teilmenge 30 gegenüber dem Referenzwert R aufweisen. Die zugehörigen Schweißperlen 16 sind zudem asymmetrisch ausgebildet.

**Patentansprüche**

1. Verfahren (40) zum Auswerten einer Schweißqualität einer Schweißnaht (14) mit der Endabschnitte von zumindest zwei länglich erstreckten Leiterelementen (12), welche durch Bestrahlung ihrer Stirnseiten (13) miteinander verschweißt sind, wobei das Verfahren (40) die folgenden Schritte aufweist:

(a) Erfassen eines Bildes (20) der Stirnseiten (13) der mittels der Schweißnaht (14) miteinander verschweißten Leiterelemente (12), wobei das Bild (20) von den Stirnseiten (13) der Leiterelemente (12) her aufgenommen ist und die vom Bild (20) aufgenommene Umgebung zumindest eine gesamte Oberfläche der Schweißnaht (14) umfasst, und wobei das Bild (20) mit verschiedenen Intensitätsstufen in Pixeln des Bildes (20) erfasst wird, wobei die Intensitätsstufen ein Indikator für die Lichtmenge sind, die lokal beim Aufnehmen des Bildes (20) von der aufgenommenen Position reflektiert worden ist, und der Indikator damit ein Maß für eine lokale Ausrichtung der Oberfläche der Schweißnaht (14) ist, insbesondere wobei die Schweißnaht parallel zur Richtung der Aufnahme des Bildes mit Licht beleuchtet wird,

(b) Unterteilen des Bildes (20) in wenigstens eine erste Teilmenge (30) von Pixeln, deren Intensitätsstufen größer einem festgelegten Intensitätsstufen-Schwellenwert sind, und in wenigstens eine zweite Teilmenge (32) von Pixeln, deren Intensitätsstufen kleiner oder gleich dem Intensitätsstufen-Schwellenwert sind, und

(c) Beurteilen der Schweißqualität der Schweißnaht (14) anhand eines Vergleichs einer Anzahl und/oder Lage der Pixel der ersten Teilmenge (30) und/oder der zweiten Teilmenge (32) mit zumindest einem Pixel-Sollwert einer Anzahl und/oder einem Pixel-Sollbereich einer Lage von Pixeln der ersten Teilmenge (30) und/oder der zweiten Teilmenge (32), die einer Schweißnaht gewünschter Qualität entsprechen.

2. Verfahren (40) nach Anspruch 1, wobei die Intensitätsstufen Graustufen sind und der Intensitätsstufen-Schwellenwert ein Graustufen-Schwellenwert ist.

3. Verfahren (40) nach Anspruch 1 oder 2, wobei die Leiterelemente (12) Steckspulen, insbesondere Hairpins und/oder I-Pins, eines Stators (10) einer elektrodynamischen Maschine sind.

4. Verfahren (40) nach einem der voranstehenden Ansprüche, wobei ein übergeordnetes Bild (20) erfasst wird, welches mehrere Schweißnähte (14) von jeweils zumindest zwei Endabschnitten von Leiterelementen (12) aufweist und das Beurteilen der Schweißqualität für jede der Schweißnähte (14) erfolgt.

5. Verfahren (40) nach einem der voranstehenden Ansprüche, wobei die Schweißqualität einer Schweißnaht (14) ausgewertet wird, durch welche die Endabschnitte von zumindest drei Leiterelementen (12) an ihren Stirnseiten miteinander verschweißt sind.

6. Verfahren (40) nach einem der voranstehenden Ansprüche, wobei ein zentraler Bereich (34) des Bildes (20), der dem Zentrum der vorgesehenen Position der Schweißnaht, insbesondere Schweißperle, entspricht, bei der Beurteilung nach Schritt (c) unberücksichtigt bleibt.

7. Verfahren (40) nach Anspruch 6, wobei der zentrale Bereich (34) ein runder oder elliptischer Bereich mit einer vorgegebenen Größe ist, in den bei ordnungsgemäßer Schweißnaht (14) eine vorgegebene Mindestanzahl von Pixeln der ersten Teilmenge (30) oder der zweiten Teilmenge (32) fällt.

8. Verfahren (40) nach einem der voranstehenden Ansprüche, wobei der Pixel-Sollwert der Anzahl und/oder der Pixel-Sollbereich der Lage durch eine Auswahl eines Mindest-Anbindungsquerschnitts als Qualitätsmerkmal der Schweißqualität festgelegt wird.

9. Verfahren (40) nach Anspruch 8, wobei für die Festlegung des der Pixel-Sollwerts der Anzahl und/oder des Pixel-Sollbereichs der Lage Daten einer Mehrzahl von als gut befundenen Schweißnähten genutzt werden, um den Pixel-Sollwert oder den Pixel-Sollbereich durch Korrelation der Lage und/oder der Anzahl einzelner Intensitätsstufen von Pixeln mit Anbindungsquerschnitten von Schweißnähten (14) zu ermitteln.

10. Verfahren (40) nach einem der voranstehenden Ansprüche, wobei das Beurteilen der Schweißqualität der Schweißnaht (14) das Beurteilen einer Symmetrie der Schweißnaht (14) anhand der Anzahl und Lage der Pixel der ersten Teilmenge (30) und/oder der zweiten Teilmenge (32) umfasst.

11. Verfahren (40) nach einem der voranstehenden Ansprüche, wobei abhängig von der Anzahl und Lage der Pixel der ersten Teilmenge (30) und/oder der zweiten Teilmenge (32) ein Nachschweißen der Schweißnaht (14) erfolgt.

12. Verfahren (40) nach Anspruch 11, wobei eine Schweißenergie für das Nachschweißen in Abhängigkeit von der Anzahl und/oder Lage der Pixel der ersten Teilmenge (30) und/oder der zweiten Teilmenge (32) gewählt wird.

13. Verfahren (40) nach einem der voranstehenden Ansprüche, wobei zeitgleich ein Auswerten einer Schweißqualität einer Schweißnaht (14) und ein Schweißen einer anderen Schweißnaht (14) an demselben Bauteil (10) mit mehreren Leiterelementen (12) erfolgt.

14. Vorrichtung (200) zum Auswerten einer Schweißqualität einer Schweißnaht (14) zwischen Endabschnitten von zumindest zwei länglich erstreckten Leiterelementen (12), welche durch Bestrahlung ihrer Stirnseiten (13) miteinander verschweißt sind, wobei die Vorrichtung (200) aufweist:

   - eine Bilderfassungseinrichtung (116) mit einem Strahlengang (118), die zur Durchführung des Schritts (a) des Verfahrens nach einem Verfahren der vorangegangenen Ansprüche ausgebildet ist
   - zumindest eine Datenverarbeitungsanlage (202), die zur Durchführung der Schritte (b) und (c) eingerichtet ist.

15. Vorrichtung nach Anspruch 14, wobei die Vorrichtung eine Beleuchtungseinrichtung (112) umfasst, die eingerichtet ist, um die Stirnseiten (13) der Leiterelemente (12) aus Richtung entlang des Strahlengang (118) der Bilderfassungseinrichtung (116) zu beleuchten.

16. Vorrichtung nach Anspruch 14 oder 15, wobei die Vorrichtung weiter eine Laserstrahlquelle (102) mit einem Strahlengang (114) des Laserstrahls zur Durchführung des Schweißvorgangs zur Verbindung der Leiterelemente (12) auf Ihrer Stirnseite (13) umfasst, insbesondere wobei der Strahlengang (118) der Bilderfassungseinrichtung (116) und der Strahlengang (114) des Laserstrahls, insbesondere mittels eines Strahlteilers (106), ineinander gekoppelt sind.

## Claims

1. Method (40) for evaluating a weld quality of a welded seam (14) that has the end portions of at least two longitudinally extended conductor elements (12) which are welded together by irradiating the end faces (13) thereof, wherein the method (40) comprises the following steps:

   (a) capturing an image (20) of the end faces (13) of the conductor elements (12) welded together by means of the welded seam (14), wherein the image (20) is recorded from the end faces (13) of the conductor elements (12) and the environment recorded by the image (20) comprises at least an entire surface of the welded seam (14), and wherein the image (20) is captured at different intensity levels in pixels of the image (20), wherein the intensity levels are an indicator of the amount of light that has been locally reflected from the recorded position during recording of the image (20), and the indicator is thus a measure of a local orientation of the surface of the welded seam (14), in particular wherein the welded seam is illuminated with light in parallel with the direction of recording of the image,
   (b) dividing the image (20) into at least a first subset (30) of pixels, the intensity levels of which are greater than a determined intensity level threshold value, and into at least a second subset (32) of pixels, the intensity levels of which are less than or equal to the intensity level threshold value, and
   (c) assessing the weld quality of the welded seam (14) by comparing a number and/or position of pixels of the first subset (30) and/or the second subset (32) with at least one pixel target value of a number and/or a pixel target range of a position of pixels of the first subset (30) and/or the second subset (32) corresponding to a welded seam of desired quality.

2. Method (40) according to claim 1, wherein the intensity levels are gray levels and the intensity level threshold value is a gray level threshold value.

3. Method (40) according to claim 1 or 2, wherein the conductor elements (12) are plug-in coils, in particular hairpins and/or I-pins, of a stator (10) of an electrodynamic machine.

4. Method (40) according to one of the preceding claims, wherein a higher-level image (20) is captured which comprises a plurality of welded seams (14) of at least two end portions of conductor elements (12) in each case, and the assessment of the weld quality is carried out for each of the welded seams (14).

5. Method (40) according to one of the preceding claims, wherein the weld quality is evaluated of a welded seam (14) by which the end portions of at least three conductor elements (12) are welded together at the end faces thereof.

6. Method (40) according to one of the preceding claims, wherein a central region (34) of the image (20), which corresponds to the center of the intended position of the welded seam, in particular weld bead, is not taken into account in the assessment according to step (c).

7. Method (40) according to claim 6, wherein the central region (34) is a round or elliptical region having a predetermined size, into which a predetermined minimum number of pixels of the first subset (30) or the second subset (32) fall when the welded seam (14) is properly made.

8. Method (40) according to one of the preceding claims, wherein the pixel target value of the number and/or the pixel target range of the position is determined by a selection of a minimum connection cross-section as a quality feature of the weld quality.

9. Method (40) according to claim 8, wherein data relating to a plurality of welded seams deemed to be good are used for determining the pixel target value of the number and/or the pixel target range of the position, in order to ascertain the pixel target value or the pixel target range by correlating the position and/or the number of individual intensity levels of pixels with connection cross-sections of welded seams (14).

10. Method (40) according to one of the preceding claims, wherein assessing the weld quality of the welded seam (14) comprises assessing a symmetry of the welded seam (14) based on the number and position of the pixels of the first subset (30) and/or the second subset (32).

11. Method (40) according to one of the preceding claims, wherein the welded seam (14) is rewelded depending on the number and position of the pixels of the first subset (30) and/or the second subset (32).

12. Method (40) according to claim 11, wherein a weld power for the rewelding is selected depending on the number and/or position of the pixels of the first subset (30) and/or the second subset (32).

13. Method (40) according to one of the preceding claims, wherein a weld quality of a welded seam (14) and welding of a different welded seam (14) on the same component (10) having a plurality of conductor elements (12) are evaluated simultaneously.

14. Device (200) for evaluating a weld quality of a welded seam (14) between end portions of at least two longitudinally extended conductor elements (12), which are welded together by irradiating the end faces (13) thereof, the device (200) comprising:

    - an image capturing means (116) having a beam path (118), which is designed to carry out step (a) of the method according to a method of the preceding claims
    - at least one data processing system (202) which is configured to carry out steps (b) and (c).

15. Device according to claim 14, wherein the device comprises an illumination means (112) designed to illuminate the end faces (13) of the conductor elements (12) from a direction along the beam path (118) of the image capturing means (116).

16. Device according to claim 14 or 15, wherein the device further comprises a laser beam source (102) having a beam path (114) of the laser beam for carrying out the welding process for joining the conductor elements (12) on the end faces (13) thereof, in particular wherein the beam path (118) of the image capturing means (116) and the beam path (114) of the laser beam are coupled into one another, in particular by means of a beam splitter (106).

**Revendications**

1. Procédé (40) d'évaluation d'une qualité de soudure d'un cordon de soudure (14) avec les parties d'extrémité d'au moins deux éléments conducteurs (12) allongés, lesquels sont soudés l'un à l'autre par irradiation de leurs faces frontales (13), dans lequel le procédé (40) présente les étapes suivantes :

    (a) l'acquisition d'une image (20) des faces frontales (13) des éléments conducteurs (12) soudés les uns aux autres au moyen du cordon de soudure (14), dans lequel l'image (20) est prise depuis les faces frontales (13) des éléments conducteurs (12) et l'environnement pris par l'image (20) comprend au moins une surface entière du cordon de soudure (14), et dans lequel l'image (20) est acquise avec différents niveaux d'intensité dans des pixels de l'image (20), dans lequel les niveaux d'intensité sont un indicateur de la quantité de lumière qui a été réfléchie localement par la position enregistrée lors de la prise de l'image (20), et l'indicateur est ainsi une mesure d'une orientation locale de la surface du cordon de soudure (14), en particulier dans lequel le cordon de soudure est éclairé avec de la lumière parallèlement à la direction de la prise de l'image,

(b) la division de l'image (20) en au moins un premier sous-ensemble (30) de pixels dont les niveaux d'intensité sont supérieurs à une valeur de seuil de niveau d'intensité prédéterminée, et en au moins un deuxième sous-ensemble (32) de pixels dont les niveaux d'intensité sont inférieurs ou égaux à la valeur de seuil de niveau d'intensité, et

(c) l'évaluation de la qualité de soudure du cordon de soudure (14) à l'aide d'une comparaison d'un nombre et/ou d'une position des pixels du premier sous-ensemble (30) et/ou du deuxième sous-ensemble (32) avec au moins une valeur de consigne de pixels d'un nombre et/ou d'une plage de consigne de pixels d'une position de pixels du premier sous-ensemble (30) et/ou du deuxième sous-ensemble (32) qui correspondent à un cordon de soudure de qualité souhaitée.

2. Procédé (40) selon la revendication 1, dans lequel les niveaux d'intensité sont des niveaux de gris et la valeur de seuil de niveau d'intensité est une valeur de seuil de niveau de gris.

3. Procédé (40) selon la revendication 1 ou 2, dans lequel les éléments conducteurs (12) sont des bobines enfichables, notamment des épingles à cheveux et/ou des broches I, d'un stator (10) d'une machine électrodynamique.

4. Procédé (40) selon l'une quelconque des revendications précédentes, dans lequel une image (20) supérieure est acquise, laquelle présente plusieurs cordons de soudure (14) de respectivement au moins deux parties d'extrémité d'éléments conducteurs (12) et l'évaluation de la qualité de soudure est effectuée pour chacun des cordons de soudure (14).

5. Procédé (40) selon l'une quelconque des revendications précédentes, dans lequel la qualité de soudure d'un cordon de soudure (14), par lequel les parties d'extrémité d'au moins trois éléments conducteurs (12) sont soudées entre elles sur leurs faces frontales, est évaluée.

6. Procédé (40) selon l'une quelconque des revendications précédentes, dans lequel une zone centrale (34) de l'image (20), qui correspond au centre de la position prévue du cordon de soudure, en particulier de la perle de soudure, n'est pas prise en compte lors de l'évaluation selon l'étape (c).

7. Procédé (40) selon la revendication 6, dans lequel la zone centrale (34) est une zone circulaire ou elliptique d'une taille prédéfinie, dans laquelle tombe un nombre minimal prédéfini de pixels du premier sous-ensemble (30) ou du deuxième sous-ensemble (32) lorsque le cordon de soudure (14) est correct.

8. Procédé (40) selon l'une quelconque des revendications précédentes, dans lequel la valeur de consigne de pixels du nombre et/ou la plage de consigne de pixels de la position est déterminée par une sélection d'une section transversale de liaison minimale en tant que caractéristique de qualité de la soudure.

9. Procédé (40) selon la revendication 8, dans lequel, pour la détermination de la valeur de consigne de pixels du nombre et/ou de la plage de consigne de pixels de la position, des données d'une pluralité de cordons de soudure considérés comme bons sont utilisées, pour établir la valeur de consigne de pixels ou la plage de consigne de pixels par corrélation de la position et/ou du nombre de niveaux d'intensité individuels de pixels avec des sections transversales de liaison de cordons de soudure (14).

10. Procédé (40) selon l'une quelconque des revendications précédentes, dans lequel l'évaluation de la qualité de soudure du cordon de soudure (14) comprend l'évaluation d'une symétrie du cordon de soudure (14) à partir du nombre et de la position des pixels du premier sous-ensemble (30) et/ou du deuxième sous-ensemble (32).

11. Procédé (40) selon l'une quelconque des revendications précédentes, dans lequel, en fonction du nombre et de la position des pixels du premier sous-ensemble (30) et/ou du deuxième sous-ensemble (32), une soudure ultérieure du cordon de soudure (14) s'effectue.

12. Procédé (40) selon la revendication 11, dans lequel une énergie de soudure pour le rechargement est choisie en fonction du nombre et/ou de la position des pixels du premier sous-ensemble (30) et/ou du deuxième sous-ensemble (32).

13. Procédé (40) selon l'une quelconque des revendications précédentes, dans lequel une évaluation d'une qualité de soudure d'un cordon de soudure (14) et un soudage d'un autre cordon de soudure (14) sur le même composant (10) avec plusieurs éléments conducteurs (12) s'effectuent simultanément.

14. Dispositif (200) pour évaluer une qualité de soudure d'un cordon de soudure (14) entre des parties d'extrémité d'au moins deux éléments conducteurs (12) allongés, lesquels sont soudés l'un à l'autre par irradiation de leurs faces frontales (13), dans lequel le dispositif (200) présente :

- un système d'acquisition d'images (116) avec un trajet de faisceau (118), qui est réalisé pour mettre en oeuvre l'étape (a) du procédé selon un procédé des revendications précédentes
- au moins une installation de traitement de données (202), qui est conçue pour mettre en oeuvre les étapes (b) et (c) .

**15.** Dispositif selon la revendication 14, dans lequel le dispositif comprend un système d'éclairage (112), qui est conçu pour éclairer les faces frontales (13) des éléments conducteurs (12) depuis une direction le long du trajet de faisceau (118) du système d'acquisition d'images (116).

**16.** Dispositif selon la revendication 14 ou 15, dans lequel le dispositif comprend en outre une source de faisceau laser (102) avec un trajet de faisceau (114) du faisceau laser pour la mise en œuvre de l'opération de soudage pour relier les éléments conducteurs (12) sur leur face frontale (13), en particulier dans lequel le trajet de faisceau (118) du système d'acquisition d'images (116) et le trajet de faisceau (114) du faisceau laser sont couplés l'un dans l'autre, en particulier au moyen d'un diviseur de faisceau (106).

Fig. 1

Fig. 2a    Fig. 2b    Fig. 3a    Fig. 3b

Fig. 4

EP 4 288 932 B1

Fig. 5

Fig. 6

EP 4 288 932 B1

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2019120650 A
- JP 2014238387 A
- US 2013075371 A1
- EP 0996091 A1


**In der Beschreibung aufgeführte Nicht-Patentliteratur**

- **VATE.** *Quality Control and Fault Classification of Laser Welded Hairpins in Electrical Motors,* 18. Dezember 2020
- Evaluation of Machine Learning for Quality Monitoring of Laser Welding Using the Example of the Contacting of Hairpin Windings. **MAYR et al.** 2018 8th International Electric Drives Production Conference (EDPC). IEEE, 04. Dezember 2018, 1-7
- Proceedings of the International Conference on Robotics and Automation. IEEE Comp. Soc. Press, 15. Mai 1989, vol. 1, 515-520